# EUROPEAN PATENT APPLICATION

(11) **EP 1 944 350 A2**
(43) Date of publication of application: **16.07.2008**
(21) Application number: 07118295.0
(22) Date of filing: 11.10.2007
(51) Int. Cl.: C09K 11/77, G21K 4/00

(54) **Method of optimizing photostimulated speed level for needle image plates.**

(30) Priority: 12.01.2007 EP 07100443
(71) Applicant: Agfa HealthCare NV, 2640 Mortsel (BE)
(72) Inventor: Tahon, Jean-Pierre, 2640, Mortsel (BE); Loncke, Frank, 2640, Mortsel (BE); Vrielinck, Henk, 2640, Mortsel (BE); Callens, Freddy, 2640, Mortsel (BE)

(57) **Abstract**

In a method of annealing a storage phosphor screen comprising a photostimulable phosphor by adding energy in form of heat and/or radiation, said method is applied during a time and in relative humidity conditions such that said phosphor is characterised in that peaks in an electron paramagnetic resonance (EPR) spectrum measured at a frequency of 34 GHz, at flux densities of magnetic fields of 880 mT , 1380 mT and 1420 mT, exceed normalised signal intensity percentages of at least 45 and even at least 55 %, wherein a central peak height in the said EPR-spectrum, measured at a magnetic flux density of 1220 mT, is calculated to have a normalised value of 100%.■

## Description

### FIELD OF THE INVENTION

The present invention is related with an annealing method of photostimulable phosphor plates and, more particularly with Needle Image Plates having Eu-doped CsBr phosphor crystals.

### BACKGROUND OF THE INVENTION

Speed optimisation of storage phosphor panels in radiographic imaging is an ever lasting demand, the more as higher speed is directly related with a lower exposure dose which is highly desired for the patient. Alternatively for the same exposure a higher speed is related with a higher DQE (detection quantum efficiency), which is highly desired in an application as e.g. mammography.

One way to effectively steer and correct speed within the field of vapour deposited needle image phosphors is the manufacturing wherein in the method a step called "annealing" is applied. Annealing may be applied by addition of energy in form of heat and/or radiation, wherein an amount of energy is added within a time-period.

So e.g. in US-A 6,730,243 a CsX:Eu phosphor shows, upon excitation with light of 370 nm, at a wavelength of λₘₐₓ, a maximum emission intensity I₀ and at λₘₐₓ + 30 nm an emission intensity I, such that I ≤ 0.20 I₀.

In US-Application 2004/0131767 correction by annealing is performed by a method to produce a luminophore layer with following steps: a) deposition of the luminophore layer (4) from the vaporisation phase on a substrate (3), b) locally resolved measurement of the light efficiency and c) locally resolved tempering of the luminophore layer (4) at locations at which the light efficiency is less than a predetermined value.

In US-A 7,126,135 a Eu-doped CsBr-type storage phosphor screen or panel provides ratios of ultraviolet luminescence intensities of at least 10/9 after having been exposed with radiation having a wavelength in the range from 150 to 400 nm , measured at same sites of the screen or panel, once without and once with pretreatment of said storage phosphor screen or panel with short ultraviolet radiation in the range from 150 nm to 300 nm, having an energy of 10 mJ/mm2.

US-Application 2006/0141133 in a method of preparing a stimulable phosphor layer comprises a phosphor composed of a host or matrix compound and a dopant or activator compound or element wherein a precipitate or inclusion having a size in the range from 10-3 µm up to 10 µm is present in said matrix compound after performing following steps
- providing one or more crucibles containing precursor compounds for said host, said dopant and said precipitate, by increasing the temperature of said crucible(s) up to a temperature provoking evaporation of all of said precursor compounds as a vaporised latent phosphor cloud,
- depositing said vaporised latent phosphor cloud in form of a layer onto a temperature controlled substrate, followed by cooling said substrate, and further annealing said phosphor layer at a temperature in the range from 35°C up to 200°C, wherein said method is characterised by performing said annealing in an atmosphere having a water content of more than 10 g per m³ of dry air at the temperature at which annealing proceeds.

In US-A 20050218340 and US-A 6,852,357 it has been set forth that the annealing condition for the phosphor layer is not particularly limited. For example, the phosphor layer is preferably annealed in an inert atmosphere such as a nitrogen atmosphere at 50°C. to 600°C. (particularly 100°C. to 300°C) for 10 minutes to 10 hours (particularly 30 minutes to 3 hours).

US-A 2006/0060792 tells that a thus formed phosphor layer is subjected to a heat treatment (annealing) for imparting favorable photostimulated luminescence characteristics thereto and improving the photostimulated luminescence characteristics thereof.

The annealing condition for the phosphor layer is not particularly limited. For example, the phosphor layer is preferably annealed in an inert atmosphere such as a nitrogen atmosphere at 50°C to 600°C (particularly at 100°C to 300°C) for 10 minutes to 10 hours (particularly for 30 minutes to 3 hours). Then, the phosphor layer is subjected to a heat treatment (annealing) for imparting favorable photostimulated luminescence characteristics thereto and improving the photostimulated luminescence characteristics thereof.

Specifically, when a stimulable phosphor layer is prepared employing the aforesaid vapor phase method (sedimentation), application of several thermal processes such as heating of raw materials, heating of the support during vacuum evaporation, and annealing after the layer formation (relaxation of distortion of the substrate) cause non-uniform distribution of activators. However, all these heating processes have been essentially required to provide durability to the stimulable phosphor layer as becomes clear from US- 6,992,305.

In US-Application 2005/0040340 a radiographic image conversion panel comprises a support and a photostimulable phosphor layer is provided on the support, wherein a photostimulable phosphor is formed on the support by a vapor phase deposition method, and a heat post-treatment is performed at a temperature of from 80° C to 300°C.

Further in US-A 2004/0041100 it has been posed that, specifically when a stimulable phosphor layer was formed through vapor deposition, there were often conducted heating treatments, such as heating raw material, heating a substrate (or support) during vacuum deposition and annealing (for relaxation of substrate strain) after forming the layer, so that the existing state of the activator was varied, causing inhomogeneous presence of an activator. Any of such heating treatments seems to be indispensable to enhance durability of the stimulable phosphor layer. In US-A 2004/0188634 a radiographic image conversion panel, comprising at least one photostimulable phosphor layer has been disclosed, wherein a strength ratio of a peak at a luminescence wavelength of 440 nm in an ultraviolet ray excitation wavelength of 274 nm of a photostimulable phosphor before heating the one photostimulable phosphor layer at 400°C to that after the heating is within + 10%.

From all of these references it is clear that applying an "after-treatment" with heat and/or radiation is merely a matter of trial and error in order to be sure to have attained the highest speed level for the storage phosphor plate. It would thus be highly desired to have a tool in order to be sure that the highest speed has really been attained.

### OBJECTS AND SUMMARY OF THE INVENTION

Therefore it is a first object of the present invention to look for a marker in order to allow optimisation of a NIP up to the highest photostimulated speed level desired.

Moreover it is an object of the present invention to look for a marker allowing optimisation of a NIP up to a desired reproducible photostimulated speed level.

As a further object a marker was envisaged in order to measure the overall plate quality in view of ageing phenomena.

A solution in order to attain the objects of the present invention has been found in EPR (electron paramagnetic resonance) as providing an interesting marker representative for photostimulated intensity in needle-image storage phosphor plates, having (stable) EPR-detectable Eu-ligand complexes.

From EPR-spectra, i.e. intensities of signals as measured in a magnetic field, more specifically in a magnetic field having a flux density in the range between 500 mT and 1500 mT it has become clear that a higher speed correlates very well with a higher PSL- signal at well-defined magnetic flux densities and a higher EPR-signal intensity, being an indicator of more EPR-detectable Eu-ligand complexes.

The above mentioned objects have thus been realised by a photostimulable or storage phosphor screen or panel, having the specific features defined in claim 1. Specific features for preferred embodiments of the invention are set out in the dependent claims. Further advantages and embodiments of the present invention will become apparent from the following description and drawings.

### BRIEF DESCRIPTION OF THE DRAWINGS

FIG.1 shows a typical Q band EPR spectrum, for a frequency f of 33.94 GHz: the broad zero field splitting signal has been represented here as a 7-line spectrum.
FIG.2 shows how the intensity of the EPR signal for a frequency f of 33.94 GHz is determined, more particularly at magnetic flux densities of 880 mT, 1220 mT and 1380 mT.
FIG.3 is illustrative for the existing correlation between photostimulated luminescence, i.e. speed of 6 differently treated CB12078 NIPs and EPR signal intensities, measured as illustrated in FIG.2: the "central peak" refers to the intensity as measured at a flux density of 1220 mT.

### DETAILED DESCRIPTION OF THE INVENTION

In one embodiment according to the present invention the annealing method of a photostimulable or storage phosphor screen or panel comprising a photostimulable phosphor proceeds by adding energy in form of heat and/or radiation wherein said method is applied during a time and in relative humidity conditions such that said phosphor is characterised in that peaks in an EPR-spectrum measured at a frequency of 34 GHz, at flux densities of magnetic fields of 880 mT , 1380 mT and 1420 mT, exceed normalised signal intensity percentages of at least 45 %, wherein a central peak height in the said EPR-spectrum, measured at a magnetic flux density of 1220 mT, is calculated to have a normalised value of 100%.

In another embodiment according to the present invention said annealing method of a storage phosphor screen comprising a photostimulable phosphor proceeds by adding energy in form of heat and/or radiation, wherein said method is applied during a time and in relative humidity conditions such that said phosphor is characterised in that peaks in an EPR-spectrum measured at a frequency of 34 GHz, at flux densities of magnetic fields of 880 mT , 1380 mT and 1420 mT, exceed normalised signal intensity percentages of at least 55 %, wherein a central peak height in the said EPR-spectrum, measured at a magnetic flux density of 1220 mT, is calculated to have a normalised value of 100%.

Following particular embodiments according to the present invention provide a storage phosphor screen, wherein in an EPR-spectrum measured at a frequency of 34 GHz, a ratio of EPR signals having an intensity measured in a magnetic field at flux densities of 880 mT and of 1220 mT respectively, is not less than 0.03.

In a further particular embodiment for said storage phosphor screen according to the present invention, a ratio of EPR signals having an intensity measured in a magnetic field at flux densities of 880 mT and of 1220 mT respectively, is less than 0.25.

In still another particular embodiment for said storage phosphor screen according to the present invention, in an EPR-spectrum measured at a frequency of 34 GHz, a ratio of EPR signals having an intensity measured in a magnetic field at flux densities of 1380 mT and of 1220 mT respectively, is not less than 0.25.

Moreover in a storage phosphor screen according to the present invention said ratio of EPR signals having an intensity measured in a magnetic field at flux densities of 1380 mT and of 1220 mT respectively, is less than 0.6.

According to the present invention in said storage phosphor screen said photostimulable phosphor is a lanthanide doped alkali metal halide phosphor. Said halide is selected from the group consisting of F, Cl, Br and I or a combination thereof.

More particularly according to the present invention in said storage phosphor screen said photostimulable phosphor is a europium doped alkali metal halide phosphor.

Further according to the present invention in said storage phosphor screen said photostimulable phosphor is a needle-shaped europium doped cesium halide phosphor, and even more particularly said photostimulable phosphor is a binderless needle-shaped europium doped cesium halide phosphor.

In a specific embodiment according to the present invention in said storage phosphor screen said photostimulable phosphor is a binderless needle-shaped CsBr:Eu phosphor.

According to the present invention in said storage phosphor screen said CsBr:Eu phosphor includes stable Eu-ligand complexes.

With respect to the desired presence of stable Eu-ligand complexes, normalised peak signals, measured in the EPR-spectra at 880 mT are advantageously in the range between 0.10 and 0.25 according to the method of the present invention.

Moreover with respect to the desired presence of stable Eu-ligand complexes, normalised peak signals, measured in the EPR-spectra at 1380 mT are advantageously in the range between 0.40 and 0.60 according to the method of the present invention.

Moreover according to the annealing method of the present invention said time is at least 4 hours and said relative humidity is at least 0.19 %.

After production of the Needle Image Plates (NIPs) of Eu doped CsBr, an annealing/after-treatment is carried out on the plates in order to increase their photostimulated luminescence (PSL) response to X-ray irradiation. It has been found now that, when this process creates a stable defect in form of a "Eu-ligand complex" which is detectable by Electron Paramagnetic Resonance (EPR), then an optimised speed level is attainable for that NIP as a storage phosphor screen prepared according to the annealing method as described hereinbefore.

The EPR signal obtained after various treatments (see Table 3) corresponding to this defect has been labelled the "AA-EPR" signal.

In the present invention specifications are further described in order to provide a method for the detection of the AA-EPR signal and for the interpretation of its features.

In EPR spectroscopy known as a tool providing ability to detect paramagnetic defects, an external magnetic field, the magnetic flux density of which is varied, produces differences in energy between the electronic states of the defect, i.e. the Eu-ligand complex(es). While this magnetic field is swept, a microwave field with an appropriate constant frequency is applied. At well-defined characteristic magnetic fields, i.e. "resonance fields", where resonance effectively occurs, microwave energies become absorbed. The spectrum thus obtained and registered, contains information about both the structure, i.e. the position, the number and the relative intensity of the resonances and the concentration, i.e. the total intensity of the spectrum of the defect. Spectra are conventionally displayed as the first derivative of the absorption.

While the present invention will hereinafter in the examples be described in connection with preferred embodiments thereof, it will be understood that it is not intended to limit the invention to those embodiments.

### Examples

A commercially available EPR spectrometer was taken in order to perform the experiments. Such an EPR spectrometer typically includes
1. a magnet;
2. a microwave bridge;
3. a console with field-controller and signal-channel;
4. a cavity;
   and, in order to perform measurements below room temperature,
5. a cryostat.

Different microwave frequencies are commercially available. Standard "X band frequency", i.e. frequency f = 9.5 GHz appeared not to be suitable in order to detect the desired signal.

At the "Q band frequency", i.e. a frequency f = 34 GHz, the most appropriate signal was obtained.
The g value and field measurement unit further included
1. a frequency counter in the Q band range
2. a magnetic field probe (NMR Gaussmeter)

EPR quartz tubes having an appropiate diameter as for the "Q band", i.e. quartz tubes with an outer diameter of 2.0 mm and inner diameter of 1.2 mm were used as commonly applied, and CFQ (Clear Fused Quartz) quality was found to be adequate.

### Procedure

### 1. Sample preparation.

In order to measure the "AA-EPR" signal from NIPs, plate material was collected with a clean cleaving knife and optionally pulverised in a mortar. With the resulting powder an EPR quartz tube as described above was filled up to a height of 3 mm. Alternatively needle-shaped phosphors may be measured in a needle-form, without being pulverised.

### 2. "Q band EPR" (at a frequency of 34 GHz).

In "Q band EPR" the "AA-EPR"- signal was detected in the temperature range 4°K - 300°K. At higher temperatures the shape was slightly different and the signal-to-noise ratio was much worse.

Suitable measuring parameters on a BRUKER ELEXSYS E500 spectrometer were following:
- Temperature: 20°K
- Magnetic Field Range (flux densities): varying from 500 to 1500 mT
- Modulation Amplitude: in the range from 0.2 mT to 0.5 mT
- Microwave power: from 0 dB attenuation (170 mW) to 10 dB attenuation (17 mW)
- Sweep Time: from 671 s to 1342 s
- Receiver Gain: from 50 dB to 60 dB

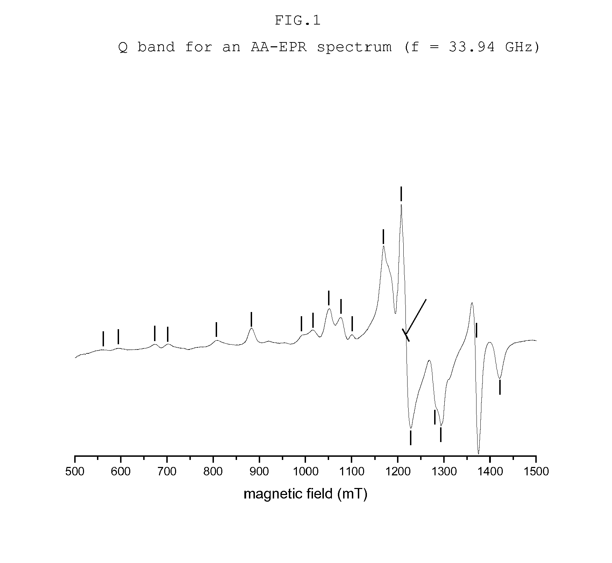

Relevant AA-EPR features, as indicated in FIG.1, extend from 500 mT to 1500 mT in the Q band spectrum of the AA-EPR signal. The broad signal around g ≈ 2 (magnetic field flux density around 1220 mT) was showing intensity variation, when compared with the other detected signals. This was indicative for the fact that the actual AA-EPR signal was superimposed on another signal within the range from 1100 mT to 1300 mT.

It was remarkable that that particular "central signal" at a flux density of 1220 mT did not completely disappear when the sample was taken from an "over-treated" NIP, opposite to the peaks at 880 mT and 1380 mT which tend to disappear. As long as the annealing/treatment step was leading to an increase in speed, the said peaks at 880 mT and 1380 mT were also increasing, just as the "central signal" at a flux density of 1220 mT. Disappearance of peaks should be interpreted as "not being measurable as its intensity falls down beyond the detection limit".

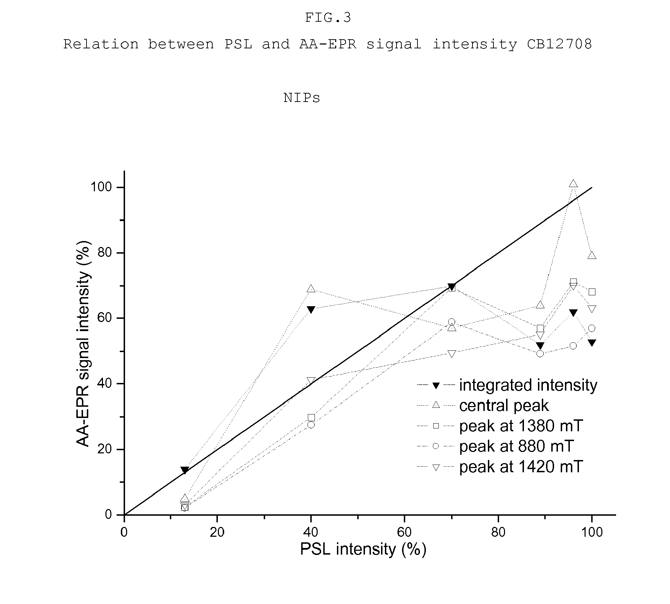

The relation between the AA-EPR and the PSL intensity follows from the data given in FIG.3. From one NIP plate (labeled CB12708) 7 samples were taken. As indicated in Table 1 different after-treatments, inclusive for optional ageing treatments, were given to those 7 samples. EPR intensities were measured from the spectra and expressed in mm. The "central peak" height in the EPR-spectra, measured at a magnetic flux density of 1220 mT, was calculated to have a normalised value of "1". 0.19%RH was standard relative humidity %.

**Table 1**

| Sample No. | After-treatment | 4 hours at T (°C) | % RH in oven | Ageing (3 days) | Sensitivity SAL% | Normalised % PSL |
|---|---|---|---|---|---|---|
| 1 | Thermal | 170 | 0.35 | None | 584 | 100 |
| 2 | None | 20 | Room RH | None | 233 | 39 |
| 3 | Thermal | 170 | 0.19 | None | 582 | 99 |
| 4 | Thermal | 300 | < 0.02 | None | 74 | 13 |
| 5 | Thermal | 170 | < 0.19 | None | 408 | 70 |
| 6 | Thermal | 170 | 0.19 | 35°C/80%RH | 517 | 89 |
| 7 | Thermal+ UV-254 nm | 170 | 0.19 | None | 563 | 96 |

Table 1 further provides information about speed/sensitivity (SAL%) and normalised percentage of photo-stimulated luminescence (PSL%).

The sample giving the highest PSL intensity was taken as a reference, corresponding with 100% PSL (normalised) intensity: in these experiments Samples 1 and 3 were both considered to represent 100% PSL intensity.

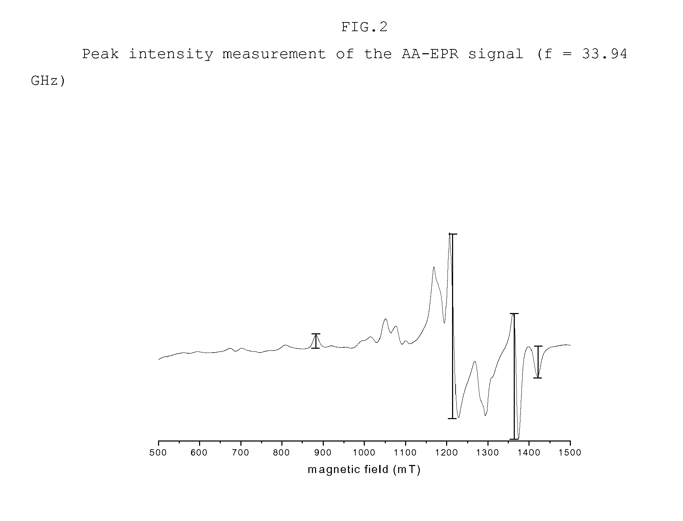

From each of those samples AA-EPR signal intensities were determined in following ways:
1. Total signal intensities as a result of a double integration of the complete spectrum; or
2. Height of a certain peak as indicated in FIG.2 for 3 different magnetic flux densities.

AA-EPR intensities corresponding with the reference sample were rescaled to 100% every time. As a guide for the eye, a line representing a 1:1 correlation was drawn in FIG.3, where the correlation between PSL and AA-EPR intensity for all of the samples (consecutively: sample 4, sample 2, sample 5, sample 6, sample 7 and samples 1 & 3) were shown.

Whereas the non-annealed phosphor sample 4 (as a comparative) and the "under-annealed" samples 2 and 5 (annealed in an environment having a relative humidity below 0.19 %) do not attain an optimised speed, the samples 7, 1 and 3 clearly do. A dedicated relative humidity of the environment while annealing at a dedicated temperature seems to be required in order to get an optimised speed.

It becomes clear from FIG.3 that AA-EPR is a suitable marker indeed for PSL intensity in NIPs, when, as a consequence of an "after-treatment" a higher concentration of stable photostimulatable Eu-ligands are formed, which becomes detectable by the electron paramagnetic resonance technique, known as EPR. In case of "over-treatment" however, the signal disappears, at least at a flux density of 880 mT, while the signal at a flux density of 1220 mT decreases.

In the Table 2 CsBr:Eu powder samples 1 and 2 were measured. Results of EPR intensities at different magnetic flux densities have been summarised for powder samples of CsBr:Eu NIP-plates as indicated. EPR intensities were measured from the spectra and expressed in mm. The "central peak" height in the EPR-spectra, measured at a magnetic flux density of 1220 mT, was calculated to have a normalised value of "1" and the intensities of the signals at 880 mT and 1380 mT were calculated, with reference to that normalised value.

In the Table 2
- "low" indicates that active photostimulatable Eu-ligand complexes are present in the NIP, but not in an optimised way, thus not leading to an optimised speed.
- "optimal" indicates that active photostimulatable Eu-ligand complexes are present in the NIP, in an optimised way, leading to an optimised speed.
- "over" indicates that active photostimulatable Eu-ligand complexes have been destroyed by "after treatment" and that PSL and speed are both irreversibly decreased.

In Table 2 samples S1 and S2 refer to first measurements performed on CsBr:Eu powders, obtained after pulverisation of columnar CsBr:Eu needles from a manufactured NIP (needle image plate).

CB50804 and CB12708/1 refer to manufactured NIPs, measured at 20°K, the needle-shaped phosphor layer of which was pulverised too.

CB12708/2 refers to a NIP, manufactured in a similar way as CB12708/1, measured at 20°K, but where the AA-EPR signal was measured from the phosphor in needle-form, without being pulverised.

**Table 2**

| Plate/ EPR | 1220 | 1220 | 1220 | 880 | 880 | 880 | 1380 | 1380 | 1380 |
|---|---|---|---|---|---|---|---|---|---|
| Treatment | low | optim | over | low | optim | over | low | optim | over |
| S1 | | 1 | | 0 | 0.059 | 0 | .250 | .353 | 0 |
| S2 | 1 | --- | --- | .038 | --- | --- | .385 | --- | --- |
| CB50804 | --- | 1 | --- | --- | .0291 | --- | --- | .282 | --- |
| CB12708/1 | 1 | 1 | 1 | .056 | .0610 | 0 | .389 | .610 | 0.250 |
| CB12708/2 | --- | 1 | --- | --- | .2390 | --- | --- | .469 | --- |

| | | | | | | | | | |
|---|---|---|---|---|---|---|---|---|---|
| "optim" stands for "optimal", definition as given above --- indicates: "not measured" | | | | | | | | | |

In summarised Table 3, minimum and maximum boundaries of normalised peak signals, measured in the EPR-spectra at different magnetic flux densities have been given.

**Table 3**

| Summary | At 880 mT | At 1200 mT | At 1380 mT |
|---|---|---|---|
| Active Eu-ligands, not optimised | 0 - 0.06 | 1 | 0.25 - 0.38 |
| Active Eu-ligands, optimised | 0.03 - 0.24 | 1 | 0.27 - 0.6 |
| Eu-ligands damaged | 0 | 1 | 0 - 0.25 |

From all of the results obtained, it is further concluded that it is not even required to provide an "annealing" technique, commonly understood as adding energy by heating the NIP at a well-defined temperature for a well-defined time, in order to attain the advantages of having an optimised NIP speed or, alternatively, by adding energy in form of radiation as e.g. UV-radiation.

Independent on the method used, it is desired to get stable enough aggregates in form of photostimulatable Eu-ligand complexes, which are not destroyed by addition of an excess of energy, which becomes expressed in normalised peak signals, measured in the EPR-spectra at 880 mT to be in the range between 0.10 and 0.25 and at 1380 mT to be in the range between 0.40 and 0.60. As explained hereinbefore the central peak height in the said EPR-spectrum, measured at a magnetic flux density of 1220 mT, is calculated to have a normalised value of 1, corresponding with 100%.

Important to notice is that complexes in form of CsₓEu_{y}Br_{x+αy}, wherein x/y > 0.25 and wherein α > 2; x and y being integers, such as in CsEuBr₃ should not be considered as a Eu-ligand complex as understood in the context of the present invention.

Measuring of particular signals in the EPR-spectrum clearly allows monitoring or visualisation of the annealing process, as an unambiguous relation has been found between EPR-signals measured, and PSL, which is equivalent with the speed of the storage phosphor as attained. Whereas annealing procedures were hitherto trial and error procedures, leading to almost uncontrolled speed of storage phosphor panels provided with an annealed photostimulable phosphor, the present invention provides ability to reproducibly anneal the said phosphor by making use as a suitable marker of the EPR-spectrum and particular signals as measured therein, leading to a controlled, reproducible speed of storage phosphor screens or panels.

Having described in detail preferred embodiments of the current invention, it will now be apparent to those skilled in the art that numerous modifications can be made therein without departing from the scope of the invention as defined in the appending claims.

## Claims

1. Method of annealing a storage phosphor screen comprising a photostimulable phosphor by adding energy in form of heat and/or radiation, wherein said method is applied during a time and in relative humidity conditions such that said phosphor is **characterised in that** peaks in an EPR-spectrum measured at a frequency of 34 GHz, at flux densities of magnetic fields of 880 mT, 1380 mT and 1420 mT, exceed normalised signal intensity percentages of at least 45 %, wherein a central peak height in the said EPR-spectrum, measured at a magnetic flux density of 1220 mT, is calculated to have normalised value of 100%.

2. Method of annealing a storage phosphor screen comprising a photostimulable phosphor by adding energy in form of heat and/or radiation, wherein said method is applied during a time and in relative humidity conditions such that said phosphor is **characterised in that** peaks in an EPR-spectrum measured at a frequency of 34 GHz, at flux densities of magnetic fields of 880 mT , 1380 mT and 1420 mT, exceed normalised signal intensity percentages of at least 55 %, wherein a central peak height in the said EPR-spectrum, measured at a magnetic flux density of 1220 mT, is calculated to have a normalised value of 100%.

3. Method according to claim 1 or 2, wherein in an EPR-spectrum measured at a frequency of 34 GHz, a ratio of EPR signals having an intensity measured in a magnetic field at flux densities of 880 mT and of 1220 mT respectively, is not less than 0.03.

4. Method according to any one of the claims 1 to 3, wherein a ratio of EPR signals having an intensity measured in a magnetic field at flux densities of 880 mT and of 1220 mT respectively is less than 0.25.

5. Method according to claim 1 or 2, wherein in an EPR-spectrum measured at a frequency of 34 GHz, a ratio of EPR signals having an intensity measured in a magnetic field at flux densities of 1380 mT and of 1220 mT respectively, is not less than 0.25.

6. Method according to any one of the claims 1 to 5, wherein a ratio of EPR signals having an intensity measured in a magnetic field at flux densities of 1380 mT and of 1220 mT respectively, is less than 0.6.

7. Method according to any one of the claims 1 to 6, wherein said photostimulable phosphor is a lanthanide doped alkali metal halide phosphor.

8. Method according to any one of the claims 1 to 6, wherein said photostimulable phosphor is a europium doped alkali metal halide phosphor.

9. Method according to any one of the claims 1 to 6, wherein said photostimulable phosphor is a needle-shaped europium doped cesium halide phosphor.

10. Method according to any one of the claims 1 to 6, wherein said photostimulable phosphor is a binderless needle-shaped europium doped cesium halide phosphor.

11. Method according to any one of the claims 1 to 6, wherein said photostimulable phosphor is a binderless needle-shaped CsBr:Eu phosphor.

12. Method according to claim 11, wherein said CsBr:Eu phosphor includes stable Eu-ligand complexes.

13. Method according to claim 12, wherein normalised peak signals, measured in the EPR-spectra at 880 mT are in the range between 0.10 and 0.25.

14. Method according to claim 12 or 13, wherein normalised peak signals, measured in the EPR-spectra at 1380 mT are in the range between 0.40 and 0.60.

15. Method according to any one of the claims 1 to 14, wherein said time is at least 4 hours and wherein said relative humidity is at least 0.19 %.

16. Storage phosphor screen prepared according to the method of any one of the preceding claims.
